(19) Europäisches Patentamt
European Patent Office
Office européen des brevets

(11) **EP 3 708 556 B1**

(12) **EUROPEAN PATENT SPECIFICATION**

(45) Date of publication and mention
of the grant of the patent:
**08.05.2024 Bulletin 2024/19**

(21) Application number: **18876938.4**

(22) Date of filing: **28.05.2018**

(51) International Patent Classification (IPC):
**C04B 35/109** $^{(2006.01)}$  **C03B 5/43** $^{(2006.01)}$
**C04B 35/484** $^{(2006.01)}$

(52) Cooperative Patent Classification (CPC):
**C04B 35/484; C03B 5/43; C04B 35/109;**
**C04B 35/481;** C04B 2235/3201; C04B 2235/3217;
C04B 2235/3244; C04B 2235/3418; C04B 2235/95;
Y02P 40/57

(86) International application number:
**PCT/JP2018/020332**

(87) International publication number:
**WO 2019/092908 (16.05.2019 Gazette 2019/20)**

(54) **ALUMINA-ZIRCONIA-SILICA FUSED CAST REFRACTORY AND GLASS MELTING FURNACE**

SCHMELZGEGOSSENES FEUERFESTPRODUKT AUS
ALUMINIUMOXID-ZIRKONOXID-SILICIUMOXID UND GLASSCHMELZOFEN

RÉFRACTAIRE COULÉ PAR FUSION À BASE D'ALUMINE-ZIRCONE-SILICE ET FOUR DE FUSION
DE VERRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **07.11.2017 JP 2017214723**

(43) Date of publication of application:
**16.09.2020 Bulletin 2020/38**

(73) Proprietor: **AGC Ceramics Co., Ltd.**
**Tokyo 108-0014 (JP)**

(72) Inventors:
• **TANIMOTO Toshiro**
**Takasago-shi**
**Hyogo 676-8655 (JP)**

• **MATANO Kenji**
**Takasago-shi**
**Hyogo 676-8655 (JP)**

(74) Representative: **Müller-Boré & Partner**
**Patentanwälte PartG mbB**
**Friedenheimer Brücke 21**
**80639 München (DE)**

(56) References cited:
EP-A1- 2 221 286      WO-A1-2009/072627
JP-A- S6 259 576      JP-A- H01 252 574
JP-A- H10 101 439      JP-A- H10 101 439
JP-A- H11 343 174      JP-A- 2001 220 249
JP-A- 2011 020 918      US-A- 2 438 552
US-A- 4 910 174      US-A1- 2001 019 992

**Description**

The present invention relates to an alumina-zirconia-silica fused cast refractory and a glass melting furnace, and particularly relates to an alumina-zirconia-silica fused cast refractory and a glass melting furnace in which cracking is effectively suppressed from occurring during manufacturing or the like.

A fused refractory can be typically obtained as follows. That is, a molten material in which a refractory raw material having a predetermined composition has been perfectly fused in an electric furnace is poured into a mold having a predetermined shape, and cooled down to a normal temperature while being kept warm. Thus, the molten material is solidified again. The fused refractory obtained thus is completely different in texture and in manufacturing process from any fired or unfired bound refractory, and is widely known as a high corrosion resistant refractory.

Among such fused cast refractories, the alumina-zirconia-silica fused cast refractory is generally called an AZS fused cast refractory, and widely used as a refractory for a glass melting furnace.

The AZS fused cast refractory typically includes about 80 to 85% (mass %; the same shall apply hereinafter unless otherwise mentioned) of a crystal phase and 15 to 20% of a matrix glass phase which fills gaps among crystals of the crystal phase. The crystal phase includes corundum crystals and baddeleyite crystals. A composition of a commercially available AZS fused cast refractory roughly contains about 28 to 41% of $ZrO_2$, about 8 to 16% of $SiO_2$, about 45 to 52% of $Al_2O_3$, and about 1 to 1.9% of $Na_2O$.

As known well, $ZrO_2$ brings about transformation expansion near 1,150°C during increase in temperature and near 850°C during decrease in temperature due to phase transition of monoclinic crystals and tetragonal crystals, where $ZrO_2$ exhibits abnormal shrinkage and expansion. The matrix glass phase plays a role like a cushion among the crystals, and absorbs a stress derived from the transformation expansion caused by the phase transition from tetragonal crystals to monoclinic crystals of zirconia when the AZS refractory is manufactured. Thus, the matrix glass phase plays an important role to manufacture the refractory without any cracks.

However, the matrix glass phase exhibits a phenomenon (called glass exudation) that the matrix glass phase exudes to the outside of the refractory when the temperature thereof reaches 1,400°C or higher in use. The glass exudation phenomenon is considered to occur because the viscosity of the matrix glass phase is lowered due to a high temperature so that the matrix glass phase is fluidized, while the matrix glass phase is pushed out by the force of gas released at a high temperature from the AZS fused cast refractory.

The glass composition exuding to the surface is a high-viscosity glass rich in alumina and zirconia. Accordingly, when the exuding glass composition of the refractory used in a glass furnace is mixed into a mother glass, glass defects such as cast scratches, glass knots or cords which spoil the quality of the mother glass drastically are generated.

Therefore, for example, an AZS fused cast refractory in which the content of a matrix glass phase is reduced and corrosion resistance unique to zirconia is used effectively to suppress glass exudation has been known as an AZS fused cast refractory in which glass exudation is less apt to occur than a conventional one.

Thus, various attempts have been made and various methods have been proposed in order to develop AZS fused cast refractories having desired properties while suppressing glass exudation. For example, in order to obtain more excellent manufacturing properties, an AZS fused cast refractory in which $SiO_2$ and $Na_2O$ or $K_2O$ are contained and the contents thereof are adjusted to have a predetermined relationship has been known (for example, see Patent Literatures 1 to 4). EP2221286A1 describes an alumina-zirconia-silica refractory composition comprising 44.95 mass% $Al_2O_3$, 37.6 mass% $ZrO_2$, 14.8 mass% $SiO_2$, 1.4 mass% $Na_2O$ and 0.89 mass% $K_2O$.

Patent Literature 1: JP-B-H6-053604
Patent Literature 2: Japanese Patent No. 4,275,867
Patent Literature 3: Japanese Patent No. 4,297,543
Patent Literature 4: Japanese Patent No. 3,904,264

However, as the content of the matrix glass phase is reduced, the AZS fused cast refractory tends to be cracked when it is manufactured. For such an AZS fused cast refractory, it is difficult to perfectly suppress the AZS fused cast refractory from being cracked when it is manufactured.

When cracking occurs, the cracked part is removed from the refractory by grinding, polishing or the like, whereby the refractory which has no crack is finished as a product. That is, it is necessary to manufacture the fused cast refractory larger than the shape or size of an intended product in consideration of the grinding or polishing. Thus, there is a problem that the manufacturing cost cannot be reduced below a certain level.

An object of the present invention is to solve the aforementioned problem belonging to the background art to provide an AZS fused cast refractory which is further suppressed from being cracked when it is manufactured, so that a part to be ground or polished can be reduced, and to provide a glass melting furnace using the AZS fused cast refractory.

As a result of earnest investigation, the present inventors found that the aforementioned problem can be solved by an alumina-zirconia-silica fused cast refractory which includes $Al_2O_3$, $ZrO_2$, $SiO_2$, $Na_2O$ and $K_2O$ as essential components and in which those essential components are blended to have predetermined contents respectively. Thus, the present invention was completed as follows.

[1] An alumina-zirconia-silica fused cast refractory including $Al_2O_3$, $ZrO_2$, $SiO_2$, $Na_2O$ and $K_2O$ as essential components, in which

the alumina-zirconia-silica fused cast refractory includes, in mass % on an oxide basis:

30 to 75% of $Al_2O_3$;
20 to 55% of $ZrO_2$;
5 to 15% of $SiO_2$;
0.12 to 1.52% of $Na_2O$; and
0.11 to 1.46% of $K_2O$, and

the alumina-zirconia-silica fused cast refractory satisfies the following Expression (1) and Expression (2):

$$0.095 \leq (Na_2O + K_2O/1.52)/SiO_2 \leq 0.125 \qquad ...(1);$$

and

$$0.30 \leq (K_2O/1.52)/(Na_2O + K_2O/1.52) \leq 0.55 \qquad ...(2)$$

(in the aforementioned Expression (1) and Expression (2), each chemical formula expresses a content (mass %) of the chemical formula in the refractory).

[2] The alumina-zirconia-silica fused cast refractory according to the aforementioned configuration [1], having a volume of 15 L or more.
[3] A glass melting furnace including the alumina-zirconia-silica fused cast refractory according to the aforementioned configuration [1] or [2].
[4] The glass melting furnace according to the aforementioned configuration [3], in which the alumina-zirconia-silica fused cast refractory is disposed within a region contacting at least one of a molten glass and a gas released by melting a glass.

Here, the fused refractory is typically formed into a desired shape by casting a refractory raw material fused in an electric furnace as described above. Therefore, the fused refractory will be described below as a fused cast refractory. However, in the present description, the term "fused cast refractory" also includes a body fused and then solidified simply in the furnace or a material solidified and then crushed to be useful as an aggregate for a bound refractory or the like.
For the alumina-zirconia-silica fused cast refractory according to the present invention, a crack is suppressed from occurring during a manufacturing of the refractory or the like, and it is possible to provide an alumina-zirconia-silica fused cast refractory which is suitable as a refractory for a glass melting furnace.
A glass melting furnace according to the present invention uses a fused cast refractory which is excellent in corrosion resistance against glass components, so that glasses can be melted stably. Therefore, glass products having good qualities can be manufactured with good yield. In addition, the fused cast refractory can be effectively suppressed from being cracked when it is manufactured. Therefore, the manufacturing cost of the glass melting furnace can be reduced on a large scale.

BRIEF DESCRIPTION OF DRAWINGS

FIG. 1 is a graph showing a relationship between Expression (1) and Expression (2) in Examples.
FIG. 2 is a graph showing a relationship between the content of zirconia and a numerical value about cracking at an edge in Examples.

The present invention will be described below in detail.

As described above, the alumina-zirconia-silica fused cast refractory according to the present invention is characterized by including $Al_2O_3$, $ZrO_2$, $SiO_2$, $Na_2O$ and $K_2O$ as essential components, in which the essential components are blended to have predetermined contents respectively. Incidentally, in the present description, the fused cast refractory may be referred to as a refractory or an ingot.

Each component of the alumina-zirconia-silica fused cast refractory according to the present invention will be described below.

$Al_2O_3$ is an essential component in the present invention. Alumina forms corundum crystals, which show high corrosion resistance and have a characteristic not showing abnormal expansion or contraction in accordance with a temperature change.

The content of $Al_2O_3$ is 30 to 75%. When the content of $Al_2O_3$ is 75% or lower, the content of $ZrO_2$ can be relatively prevented from being too low and made proper, so that durability can be improved. In addition, the amount of a matrix glass phase can be prevented from being too small, while mullite is hardly generated, whereby it is easy to obtain a refractory with no crack. When the content of $Al_2O_3$ is 30% or higher, the content of $ZrO_2$ can be relatively prevented from being too high, and made proper. In this case, it is also easy to obtain a refractory with no crack. In addition, the amount of the matrix glass phase can be prevented from being too large, so that glass exudation can be suppressed.

The content of $Al_2O_3$ is preferably 35% or higher, and more preferably 40% or higher. On the other hand, the content of $Al_2O_3$ is preferably 70% or lower, and more preferably 65% or lower. Incidentally, a chemical composition in the present description is expressed in mass % on an oxide basis unless otherwise mentioned.

$ZrO_2$ is a component which forms baddeleyite crystals and which is high in resistance against corrosion of molten glass and enhances durability of the refractory. $ZrO_2$ is an essential component in the present invention.

The content of $ZrO_2$ is 20 to 55%. It is preferable to contain a larger amount of $ZrO_2$ from a view point of improving the durability. When the content of $ZrO_2$ is 20% or higher, the durability is very excellent. When the content of $ZrO_2$ is lower than 55%, expansion and contraction caused by phase transition of zirconia is relaxed within a range of the amount of the matrix glass phase which will be described later. Thus, a refractory with no crack can be obtained. In addition, when the content of zirconia with respect to the content of alumina increases, primary crystal zirconia is produced easily, so that the exudation level tends to increase.

The content of $ZrO_2$ is preferably 25% or higher, more preferably 30% or higher, and particularly preferably 32% or higher. On the other hand, the content of $ZrO_2$ is preferably 53% or lower, more preferably 52% or lower, and particularly preferably 47% or lower.

Here, eutectic crystal zirconia designates small zirconia crystals precipitated at an eutectic point in a final stage of cooling when the alumina-zirconia-silica refractory is manufactured by a fusing method. On the other hand, primary crystal zirconia designates large zirconia crystals precipitated in an early stage of the cooling. In addition, primary crystal alumina designates large alumina crystals precipitated in the early stage of the cooling.

Differences among those crystals can be easily identified by observation with a microscope. When observed with the microscope, the eutectic crystal zirconia crystals are characterized in that they are observed as an aggregate of fine crystals in corundum crystal grains, and adjacent crystals are orientated in the same direction. On the other hand, as for the primary crystal zirconia crystals and the primary crystal alumina crystals, any directivity can be hardly observed among adjacent crystals. The eutectic crystal zirconia crystals are produced in the corundum such that fine zirconia crystals are continuous to one another. However, for the primary crystal zirconia and the primary crystal alumina, crystal grains are rarely continuous to one another. As expressed by crystal grain size, the crystal grain size of the eutectic crystal zirconia crystals is not larger than about 1/5 of the maximum crystal grain size of the primary crystal zirconia and the primary crystal alumina.

$SiO_2$ is a main component forming a framework of the matrix glass. $SiO_2$ is an essential component in the present invention. The content of $SiO_2$ is 5 to 15%. When the content of $SiO_2$ is 5% or higher, the absolute amount of the matrix glass increases so that a refractory with no crack can be obtained easily, and the obtained refractory can exhibit good texture. When the content of $SiO_2$ is 15% or lower, the contents of $Al_2O_3$ and $ZrO_2$ which are crystal components relatively increase, thereby improving the durability.

The content of $SiO_2$ is preferably 6% or higher, and more preferably 8% or higher. On the other hand, the content of $SiO_2$ is preferably 14% or lower.

$Na_2O$ shows an effect of controlling the viscosity of the matrix glass when the alumina-zirconia-silica fused cast refractory is manufactured. $Na_2O$ is an essential component in the present invention.

In the present invention, the content of $Na_2O$ is 0.12 to 1.52%. When $Na_2O$ is contained within a range satisfying the aforementioned content, the amount of the matrix glass phase can be adjusted so that a refractory with no crack can be obtained easily, and glass exudation can be suppressed.

When the content of $Na_2O$ is 0.12% or higher, the viscosity of the matrix glass phase can be adjusted. At the same time, mullite can be suppressed from being generated and the refractory can be suppressed from being cracked.

When the content of Na$_2$O is 1.52% or lower, glass exudation can be suppressed.

The content of Na$_2$O is preferably 0.2% or higher, more preferably 0.3% or higher, even more preferably 0.35% or higher, and particularly preferably 0.4% or higher. On the other hand, the content of Na$_2$O is preferably 1.4% or lower, more preferably 1.3% or lower, even more preferably 1.25% or lower, and particularly preferably 1.2% or lower.

K$_2$O shows an effect of controlling the viscosity of the matrix glass when the alumina-zirconia-silica fused cast refractory is manufactured. K$_2$O is an essential component in the present invention.

In the present invention, the content of K$_2$O is 0.11 to 1.46%. When K$_2$O is contained within a range satisfying the aforementioned content, the amount of the matrix glass phase can be adjusted so that a refractory with no crack can be obtained easily, and glass exudation can be suppressed.

When the content of K$_2$O is 0.11 % or higher, the viscosity of the matrix glass phase can be adjusted. At the same time, mullite can be suppressed from being generated, and the refractory can be suppressed from being cracked. When the content of K$_2$O is 1.46% or lower, glass exudation can be suppressed.

The content of K$_2$O is preferably 0.2% or higher, more preferably 0.3% or higher, even more preferably 0.4% or higher, and particularly preferably 0.42% or higher. On the other hand, the content of K$_2$O is preferably 1.4% or lower, more preferably 1.3% or lower, and particularly preferably 1.2% or lower.

The alumina-zirconia-silica fused cast refractory according to the present invention may contain hafnium oxide HfO$_2$ which exists naturally in a zirconia source. The content of hafnium oxide in the aforementioned refractory may be 5% or lower, being typically 2% or lower. In the same manner as in the conventional art, the term "ZrO$_2$" designates zirconia and a small amount of hafnium oxide contained in the zirconia.

As a component other than the components described above, known components to be used in an alumina-zirconia-silica fused cast refractory may be used with no particular limitation as long as they do not impair the properties as the alumina-zirconia-silica fused cast refractory according to the present invention. Examples of those other components include oxides such as SnO$_2$, ZnO, CuO, MnO$_2$, Cr$_2$O$_3$, P$_2$O$_5$, Sb$_2$O$_5$, As$_2$O$_3$, and Yb$_2$O$_3$. When those components are contained, the total content thereof is preferably 10% or lower, preferably 3% or lower, and even more preferably 1% or lower.

The alumina-zirconia-silica fused cast refractory according to the present invention may contain constituent elements existing in a starting material to be used or generated during the manufacturing of a product, that is, for example, halogen such as fluorine or chlorine, calcium, magnesium, boron, titanium and iron as impurities. However, since those impurities lower the corrosion resistance, smaller amount thereof is preferable.

Here, the term "impurities" means components inevitably included in the starting material or components unavoidably caused by reactions of the inevitably-included components. Particularly oxide of iron or titanium is harmful, and the contents of those must be limited to a very small amount included in the starting material as impurities. Particularly the mass of Fe$_2$O$_3$+TiO$_2$ is preferably 1% or lower, and more preferably lower than 0.5%.

In the alumina-zirconia-silica fused cast refractory according to the present invention, the total content of the essential components Al$_2$O$_3$+ZrO$_2$+SiO$_2$+Na$_2$O+K$_2$O contained in the refractory may be set at 85.0% or higher. This is because a too large amount of the other components contained in the refractory reduces the contents of Al$_2$O$_3$ and ZrO$_2$, thereby lowering the durability while increasing the amount of exudation. In order to improve the durability, the total content of those essential components is preferably

$$Al_2O_3+ZrO_2+SiO_2+Na_2O+K_2O \geq 95.0\%,$$

more preferably

$$Al_2O_3+ZrO_2+SiO_2+Na_2O+K_2O \geq 99.5\%,$$

and particularly preferably

$$Al_2O_3+ZrO_2+SiO_2+Na_2O+K_2O \geq 99.9\%.$$

Further, in order to suppress occurrence of cracking, the alumina-zirconia-silica fused cast refractory according to the present invention is characterized by satisfying two relational expressions, that is, Expression (1) among the contents of SiO$_2$, Na$_2$O and K$_2$O and Expression (2) between the contents of Na$_2$O and K$_2$O.

$$0.095 \leq (Na_2O+K_2O/1.52)/SiO_2 \leq 0.125 \qquad ...(1)$$

$$0.30 \leq (K_2O/1.52)/(Na_2O+K_2O/1.52) \leq 0.55 \qquad ...(2)$$

(In the aforementioned Expression (1) and Expression (2), each chemical formula expresses a content (mass %) of the chemical formula in the refractory.)

When the aforementioned relationship of Expression (1) is satisfied, the viscosity of the matrix glass can be adjusted to be proper, and the exudation of glass components can be suppressed, while occurrence of cracking can be suppressed. Particularly, occurrence of internal cracking can be suppressed. Incidentally, in Expression (1) and Expression (2), $K_2O$ is divided by 1.52, which is a molecular weight ratio of $K_2O/Na_2O$. This is because the present inventors found out that desired properties can be obtained better by controlling with an amount of $K_2O$ expressed in terms of $Na_2O$ than by simply controlling with a total content of $Na_2O$ and $K_2O$.

When the aforementioned relationship of Expression (2) is satisfied, internal cracking and cracking at an edge can be suppressed from occurring. The present invention is characterized particularly by satisfying this relational expression. The present invention is characterized by essentially including $Na_2O$ and $K_2O$ as alkali metal oxides, and setting the blending amounts of those components in a predetermined relationship. When this relationship is satisfied, occurrence of cracking can be suppressed. Expression (2) is preferably 0.35 or higher.

When the two relational expressions are satisfied simultaneously, various types of cracking such as cracking generated from inside, cracking at an edge, and surface cracking like a tortoise shell can be suppressed from occurring. Particularly, all the types of cracking described above can be suppressed from occurring.

Here, the internal cracking is a crack generated at an internal start point in the fused cast refractory. When the crack reaches the surface, the crack is hardly removed by machining because it is generated from the inside of the fused cast refractory. The refractory having this type of cracking cannot be used as a product in many cases. Thus, the product yield is lowered extremely. On the other hand, the fused cast refractory (brick) in which cracks do not reach the surface but stay internally can be handled as a product. However, the internal cracks may advance to reach the surface during the use of the refractory, and then the cracks may cause severe problems on the use. Therefore, the internal cracking is a cracking which should be sufficiently suppressed from occurring regardless of reaching the surface.

The cracking at an edge is a crack generated at an edge part of the fused cast refractory. Although depending on the length (depth) of the crack, the fused cast refractory can be used as a product if the surface thereof is ground or polished. However, the grinding or polishing causes an extra cost. It is therefore preferable to suppress the number and a length of the cracking at an edge within predetermined ranges.

The surface cracking like a tortoise shell is a crack marked like a tortoise shell near the surface of the fused cast refractory. The fused cast refractory can be used as a product if the surface thereof is ground or polished in accordance with the cracking state. However, the grinding or polishing causes an extra cost. The surface cracking like a tortoise shell is preferably suppressed to be like stripes with no gap, and more preferably prevented from occurring.

The aforementioned cracking is evaluated as follows. That is, a fused cast refractory having predetermined dimensions is manufactured, and a surface of a part thereof is polished. Thus, the condition near the surface of the fused cast refractory is checked. The checking may be performed visually, or performed by photography with an imaging device such as a camera and use of image processing or the like.

The evaluation may be carried out as follows. That is, a fused cast refractory having predetermined dimensions (for example, 900 mm × 400 mm × 400 mm) is prepared, and a half region thereof is polished by a predetermined depth (for example, about 3 mm) along a long side of a surface (an opposite surface to a casting surface) thereof, and then the state of cracking in the polished surface is checked.

The shape, dimensions and mass of the alumina-zirconia-silica fused cast refractory according to the present invention are not limited. For example, the alumina-zirconia-silica fused cast refractory according to the present invention may have a slab-like form with a thickness of 100 mm or less. Preferably a block or a slab forms a part of a glass melting furnace, or constitute a wall or a furnace floor thereof. On this occasion, it is preferable to dispose the block or the slab within a region where it can contact molten glass or contact gas released from the molten glass. Thus, the effect of high corrosion resistance as described above can be exhibited effectively.

When the alumina-zirconia-silica fused cast refractory according to the present invention forms a part of a glass melting furnace as described above, the volume of the refractory is preferably 15 L or more.

In the alumina-zirconia-silica fused cast refractory according to the present invention, various types of cracks can be suppressed from occurring. Therefore, a large-scale refractory can be also manufactured as described above. In addition, other than the block or the slab, the alumina-zirconia-silica fused cast refractory can be also formed into a special shape such as a tuck stone for a glass melting furnace.

The alumina-zirconia-silica fused cast refractory according to the present invention can be manufactured as follows. That is, raw material powder is mixed uniformly to have the aforementioned blending ratio, and melted in an arc electric furnace. The molten raw materials are poured into a sand mold or the like and cooled down, thereby producing the refractory. Due to large energy for melting the materials, the refractory is costly. However, $ZrO_2$ crystals are elaborate

in texture and also large in size. Therefore, the refractory is more excellent in stability of corrosion resistance than a sintered refractory. Heating for melting is performed by bringing graphite electrodes into contact with the raw material powder and applying a current thereto. The alumina-zirconia-silica fused cast refractory according to the present invention obtained thus shows excellent corrosion resistance against molten glass, and is suitable for a furnace material for a glass melting furnace which is used for manufacturing a glass product such as a sheet glass.

The glass melting furnace according to the present invention includes the alumina-zirconia-silica fused cast refractory according to the present invention. The glass melting furnace including the alumina-zirconia-silica fused cast refractory according to the present invention suppresses exudation of glass components from the refractory and has excellent durability against vapor of a glass. Thus, the glass can be melted stably, and a glass product having good quality can be manufactured with good yield. It is preferable to use the alumina-zirconia-silica fused cast refractory according to the present invention in a site contacting the molten glass or in an upper structure site.

In the glass melting furnace according to the present invention, the alumina-zirconia-silica fused cast refractory according to the present invention may be disposed within a region contacting at least one of molten glass and gas released by melting the glass. Since the glass melting furnace using the alumina-zirconia-silica fused cast refractory according to the present invention suppresses exudation of glass components from the refractory and has excellent durability against vapor of a glass, the glass can be melted stably even if the refractory is disposed in the region contacting the molten glass and a glass product having good quality can be manufactured with good yield.

When a glass is melted in a glass melting furnace, gas containing Na or K may be generated from the molten glass. When a refractory in the glass melting furnace is a silica brick, the gas generated thus tends to reduce the melting point of the refractory and deform the refractory. The glass melting furnace using the alumina-zirconia-silica fused cast refractory according to the present invention contains $ZrO_2$ which is high in heat resistance. Therefore, even when the refractory is disposed in the region contacting gas released by melting a glass, the refractory can have high heat resistance. In addition, the amount of matrix glass components is so small that exudation of glass components can be suppressed and reduced.

Next, a method for manufacturing a glass sheet will be described.

The method for manufacturing a glass sheet includes heating a glass raw material in the glass melting furnace according to the present invention to obtain a molten glass, and then molding the molten glass into a sheet-shape.

In the method for manufacturing a glass sheet, first, a raw material prepared to have a composition of a glass sheet to be obtained is charged into the glass melting furnace according to the present invention, and heat the raw material preferably to about 1,400 to 1,650°C to obtain a molten glass.

The glass raw material used here is not particularly limited, but a known glass raw material may be used. Further, a glass raw material in which known glass raw materials have been mixed at a desired ratio may be used. Among them, when a glass raw material containing an alkali metal component such as $Na_2O$ is used, the effect of the present invention can be exhibited sufficiently. That is, even if a glass raw material which has caused exudation before is used, the exudation can be suppressed significantly to manufacture a glass sheet. In addition, a refining agent such as $SO_3$ or $SnO_2$ may be used in the raw material. When the refining agent is used, bubbles can be removed from the glass. A defoaming method by decompression may be applied for refining.

Next, in the method for manufacturing a glass sheet, the molten glass is shaped into a sheet-shape by a fusion process, a float process, a press molding process or the like. For example, according to the float process, the molten glass is poured onto a molten metal to be thereby shaped into a sheet-shape.

In the method for manufacturing a glass sheet, the glass sheet shaped into a sheet-shape is preferably annealed. The annealed glass sheet is cut into a desired shape.

In the method for manufacturing a glass sheet, the glass raw material is heated to obtain a molten glass in the glass melting furnace according to the present invention. Accordingly, exudation of glass components from the refractory is suppressed, and excellent durability against vapor of the glass is provided. Thus, the glass can be melted stably, and a glass having good quality can be manufactured with good yield.


EXAMPLES

The present invention will be described specifically below along working examples and comparative examples. However, the present invention should not be interpreted with any limitation to the description of those examples.


(Example 1 to Example 11)


A batch mixture in which a $ZrO_2$ raw material such as desiliconized zirconia or zircon sand, an $Al_2O_3$ raw material such as buyer alumina, an $SiO_2$ raw material such as silica sand, and raw materials of $Na_2O$, $K_2O$, etc. were prepared in predetermined amounts was charged into a 500 KVA single-phase arc electric furnace, and perfectly melted around a melting temperature of 1,900°C.

A molten material obtained by melting was charged into a mold having an internal volume of 900 mm × 400 mm × 400 mm which was made of sand or the like and surrounded by a heat insulating material made of a hollow sphere of silica or a heat insulating material made of Bayer alumina to perform casting, followed by being annealed to the vicinity of a room temperature. In the same manner as in the conventional art, melting was performed by a so-called long arc method in which electrodes were lifted up from a surface of the molten material, while oxygen was blown thereinto during the melting to keep the oxidized state of the molten material as high as possible. Thus, an alumina-zirconia-silica fused cast refractory was obtained.

Chemical analysis values (units: mass %) and several properties of the obtained fused cast refractory are shown in Table 1. Examples 1 to 6, 8 and 11 are comparative examples, and Examples 7, 9 and 10 are working examples.

Incidentally, based on contents of respective compounds, Expression (1) designates a value of $(Na_2O+K_2O/1.52)/SiO_2$, and Expression (2) designates a value of

$$(K_2O/1.52)/(Na_2O+K_2O/1.52).$$

Chemical components in the fused cast refractory designate quantitative analysis values determined by a wavelength dispersion type X-ray fluorescence spectrometer (device name: ZSX Primus II, made by Rigaku Corporation). However, quantitative analysis for the respective components is not limited to this analysis method, but may be carried out by another quantitative analysis method.

[Table 1]

| | | Composition (mass %) | | | | | | Type of cracking | | |
|---|---|---|---|---|---|---|---|---|---|---|
| | | $SiO_2$ | $Al_2O_3$ | $ZrO_2$ | $Na_2O$ | $K_2O$ | Expression (1) | Expression (2) | Internal | Edge | Tortoise shell |
| Ex. 1 | 10.5 | 56.8 | 31.6 | 0.86 | 0.0 | 0.082 | 0.00 | unacceptable | acceptable | acceptable |
| Ex. 2 | 10.1 | 57.1 | 31.5 | 1.07 | 0.0 | 0.106 | 0.00 | unacceptable | good | unacceptable |
| Ex. 3 | 10.1 | 56.6 | 31.6 | 1.45 | 0.0 | 0.144 | 0.00 | acceptable | good | unacceptable |
| Ex. 4 | 10.1 | 57.0 | 31.4 | 0.14 | 1.10 | 0.086 | 0.84 | acceptable | unacceptable | good |
| Ex. 5 | 10.2 | 54.5 | 33.5 | 0.10 | 1.48 | 0.105 | 0.91 | good | unacceptable | acceptable |
| Ex. 6 | 10.3 | 53.3 | 33.9 | 0.11 | 2.12 | 0.146 | 0.93 | good | unacceptable | good |
| Ex. 7 | 9.9 | 54.8 | 33.9 | 0.66 | 0.64 | 0.109 | 0.39 | good | acceptable | good |
| Ex. 8 | 10.0 | 54.6 | 34.1 | 0.86 | 0.28 | 0.104 | 0.18 | good | acceptable | acceptable |
| Ex. 9 | 10.6 | 52.6 | 35.1 | 0.68 | 0.77 | 0.112 | 0.43 | good | acceptable | good |
| Ex. 10 | 10.4 | 53.7 | 35.1 | 0.54 | 0.93 | 0.111 | 0.53 | good | acceptable | good |
| Ex. 11 | 10.4 | 52.5 | 35.4 | 0.42 | 1.13 | 0.112 | 0.64 | good | unacceptable | acceptable |

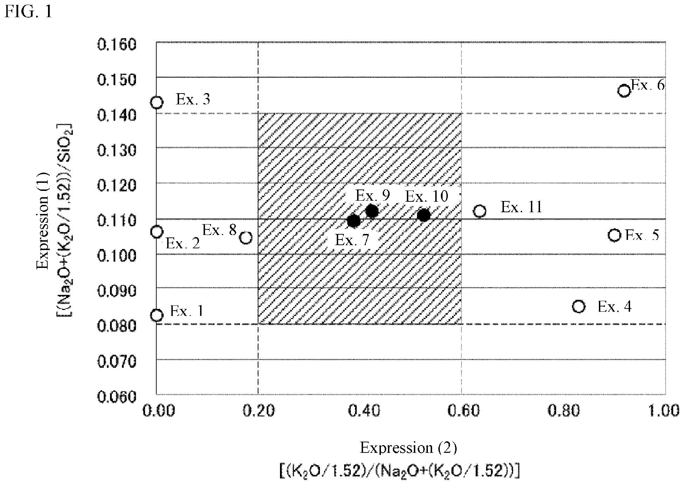

A graph expressing a relationship between Expression (1) and Expression (2) as to the fused cast refractories in Examples 1 to 11 obtained thus is shown in FIG. 1. Black dots designate working examples, and white dots designate comparative examples.

[Evaluation of Cracking]

Existence of cracking on appearance of each fused cast refractory manufactured thus was evaluated as follows. Results of the evaluation are all shown in Table 1
First, a region (900 mm × 400 mm) of a surface (an opposite surface to a casting surface) of the obtained fused cast refractory (900 mm × 400 mm × 400 mm) was polished by 3 mm. The state of cracking in the polished surface was checked visually. After that, the fused cast refractory (brick) was cut, and the state of cracking generated from inside was checked visually.

The cracking was evaluated by the following criteria as to the states of three types of cracking, that is, internal cracking, cracking at an edge, and surface cracking like a tortoise shell. Results of the evaluation are shown together in Table 1.

The cracking at an edge was evaluated by a numerical value calculated by multiplying the number of cracks at the edge by the average value of lengths of each cracks at the edge.

(Internal Cracking)

Good: No crack generated from inside exists.
Acceptable: Internal crack not exposed to the outside (a non-polished surface) exists.
Unacceptable: Crack generated from inside reaches the outside (a non-polished surface).

(Cracking at Edge)

Good:

$$\text{Number of cracks at edge} \times \text{Length (mm)} \leq 50$$

Acceptable:

$$50 < \text{Number of cracks at edge} \times \text{Length (mm)} \leq 500$$

Unacceptable:

$$500 < \text{Number of cracks at edge} \times \text{Length (mm)}$$

(Surface Cracking like Tortoise Shell)

Good: No surface cracking like a tortoise shell exists.
Acceptable: Surface cracking like a tortoise shell made of stripe cracks with no gap visually exists.
Unacceptable: Surface cracking like a tortoise shell made of cracks at intervals of about 0.5 mm exists.

When there is no cracking at the time of manufacturing, there arises no problem in manufacturing the refractory. It is very difficult to prevent cracking at an edge. When cracks at the time of manufacturing are small, a fused cast refractory slightly larger than dimensions of a required product refractory may be manufactured so that the product refractory can be manufactured easily by grinding the surface thereof. On the other hand, when cracks at the time of manufacturing are large, a refractory (ingot) much larger than dimensions of the required product refractory is manufactured and must be polished or cut heavily. As a result, since manufacture of such a refractory increases the cost very highly, it is not realistic.

(Examples 12 to 15)

Alumina-zirconia-silica fused cast refractories in which Expression (1) and Expression (2) were set to the same extent as those in Example 7 and Example 9 and the content of zirconia was varied from 35.9 to 41.1 were obtained in the same process as in the aforementioned manufacturing examples.
Chemical analysis values (units: mass %), several properties and evaluations of cracking in the obtained fused cast refractories are shown in Table 2. Examples 12 to 15 are working examples.

[Table 2]

| | Composition (mass %) | | | | | | | Type of cracking | | |
|---|---|---|---|---|---|---|---|---|---|---|
| | $SiO_2$ | $Al_2O_3$ | $ZrO_2$ | $Na_2O$ | $K_2O$ | Expression (1) | Expression (2) | Internal | Edge | Tortoise shell |
| Ex. 12 | 10.6 | 51.9 | 35.9 | 0.7 | 0.75 | 0.113 | 0.41 | good | acceptable | good |
| Ex. 13 | 10.8 | 48.57 | 39.2 | 0.7 | 0.73 | 0.109 | 0.41 | good | good | good |
| Ex. 14 | 11.0 | 57.45 | 41.1 | 0.71 | 0.74 | 0.109 | 0.41 | good | good | good |
| Ex. 15 | 10.5 | 50.9 | 37.0 | 0.62 | 0.72 | 0.104 | 0.43 | good | acceptable | good |

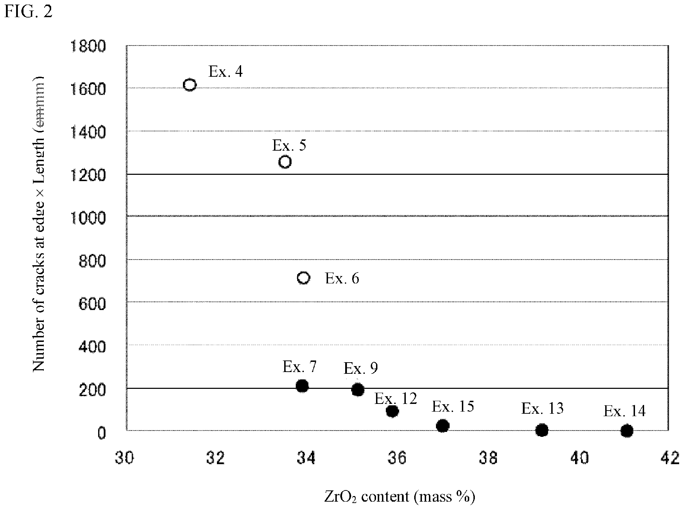

FIG. 2 shows a graph showing a relationship between the content of zirconia and the evaluation value of cracking at an edge as to the fused cast refractories obtained in Examples 4, 7 and 9 as well as Examples 12 to 15 obtained thus. It is proved that when the content of zirconia increases, cracking at an edge can be suppressed effectively, and can be further suppressed in the case of the composition according to each of those examples. Black dots designate working examples, and white dots designate comparative examples.
In the alumina-zirconia-silica fused cast refractory according to each of Examples 7, 9 to 10, and 12 to 15, various types of cracking in the refractory can be suppressed from occurring, and the manufacturing yield can be improved on a large scale. Accordingly, it is proved that a glass melting furnace using the refractory can be manufactured at low cost, can melt a glass stably, and can manufacture a glass product having good quality.
The alumina-zirconia-silica fused cast refractory according to the present invention suppresses exudation of glass components from the refractory, also has high durability against corrosion by a vapor phase, and can be manufactured easily with high productivity. Accordingly, the refractory is suitable as a refractory for a glass melting furnace, particularly as a refractory for use in a site contacting a molten glass or an upper structure site in the glass melting furnace.

**Claims**

1. An alumina-zirconia-silica fused cast refractory comprising $Al_2O_3$, $ZrO_2$, $SiO_2$, $Na_2O$ and $K_2O$ as essential components, wherein

   the alumina-zirconia-silica fused cast refractory comprises, in mass % on an oxide basis:

   30 to 75% of $Al_2O_3$;
   20 to 55% of $ZrO_2$;
   5 to 15% of $SiO_2$;
   0.12 to 1.52% of $Na_2O$; and
   0.11 to 1.46% of $K_2O$, and

   the alumina-zirconia-silica fused cast refractory satisfies the following Expression (1) and Expression (2):

   $$0.095 \leq (Na_2O + K_2O/1.52)/SiO_2 \leq 0.125 \quad ...(1);$$

   and

$$0.30 \leq (K_2O/1.52)/(Na_2O+K_2O/1.52) \leq 0.55 \qquad ...(2)$$

(in the aforementioned Expression (1) and Expression (2), each chemical formula expresses a content (mass %) of the chemical formula in the refractory).

2. The alumina-zirconia-silica fused cast refractory according to claim 1, having a volume of 15 L or more.

3. A glass melting furnace comprising the alumina-zirconia-silica fused cast refractory according to claim 1 or 2.

4. The glass melting furnace according to claim 3, wherein the alumina-zirconia-silica fused cast refractory is disposed within a region contacting at least one of a molten glass and a gas released by melting a glass.

**Patentansprüche**

1. Schmelzgegossenes Feuerfestmaterial aus Aluminiumoxid-Zirkoniumoxid-Siliziumoxid, umfassend $Al_2O_3$, $ZrO_2$, $SiO_2$, $Na_2O$ und $K_2O$ als wesentliche Komponenten, wobei

das schmelzgegossene Feuerfestmaterial aus Aluminiumoxid-Zirkoniumoxid-Siliziumoxid, in Masse-% auf Basis eines Oxids, umfasst:

30 bis 75% $Al_2O_3$;
20 bis 55% $ZrO_2$;
5 bis 15% $SiO_2$;
0,12 bis 1,52% $Na_2O$; und
0,11 bis 1,46% $K_2O$, und

das schmelzgegossene Feuerfestmaterial aus Aluminiumoxid-Zirkoniumoxid-Siliziumoxid dem folgenden Ausdruck (1) und Ausdruck (2) genügt:

$$0{,}095 \leq (Na_2O+K_2O/1{,}52)/SiO_2 \leq 0{,}125 \qquad ...(1);$$

und

$$0{,}30 \leq (K_2O/1{,}52)/(Na_2O+K_2O/1{,}52) \leq 0{,}55 \qquad ...(2)$$

(in dem vorstehend genannten Ausdruck (1) und Ausdruck (2) drückt jede chemische Formel einen Gehalt (Masse-%) der chemischen Formel in dem Feuerfestmaterial aus).

2. Schmelzgegossenes Feuerfestmaterial aus Aluminiumoxid-Zirkoniumoxid-Siliziumoxid nach Anspruch 1, aufweisend ein Volumen von 15 L oder mehr.

3. Glasschmelzofen, umfassend das schmelzgegossene Feuerfestmaterial aus Aluminiumoxid-Zirkoniumoxid-Siliziumoxid nach Anspruch 1 oder 2.

4. Glasschmelzofen nach Anspruch 3, wobei das schmelzgegossene Feuerfestmaterial aus Aluminiumoxid-Zirkoniumoxid-Siliziumoxid innerhalb eines Bereichs angeordnet ist, der mit wenigstens einem von einem geschmolzenen Glas und einem durch Schmelzen eines Glases freigesetzten Gas in Kontakt steht.

**Revendications**

1. Réfractaire coulé par fusion d'alumine-zircone-silice comprenant $Al_2O_3$, $ZrO_2$, $SiO_2$, $Na_2O$ et $K_2O$ comme composants essentiels, dans lequel

le réfractaire coulé par fusion d'alumine-zircone-silice comprend, en % en masse sur une base d'oxyde :

30 à 75 % de $Al_2O_3$ ;
20 à 55 % de $ZrO_2$ ;
5 à 15 % de $SiO_2$ ;
0,12 à 1,52 % de $Na_2O$ ; et
0,11 à 1,46 % de $K_2O$, et

le réfractaire coulé par fusion d'alumine-zircone-silice satisfait les Expression (1) et Expression (2) suivantes :

$$0,095 \leq (Na_2O + K_2O)/1,52)/SiO_2 \leq 0,125 \qquad (1) \; ;$$

et

$$0,30 \leq (K_2O/1,52)/(Na_2O + K_2O)/1,52) \leq 0,55 \qquad (2)$$

(dans les Expression (1) et Expression (2) susmentionnées, chaque formule chimique exprime une teneur (% en masse) de la formule chimique dans le réfractaire).

2. Réfractaire coulé par fusion d'alumine-zircone-silice selon la revendication 1, ayant un volume de 15 l ou plus.

3. Four de fusion de verre comprenant le réfractaire coulé par fusion d'alumine-zircone-silice selon la revendication 1 ou 2.

4. Four de fusion de verre selon la revendication 3, dans lequel le réfractaire coulé par fusion d'alumine-zircone-silice est disposé au sein d'une région venant en contact avec au moins un élément parmi un verre fondu et un gaz libéré en faisant fondre un verre.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2221286 A1
- JP H6053604 B
- JP 4275867 B
- JP 4297543 B
- JP 3904264 B